# EUROPEAN PATENT APPLICATION

(11) **EP 1 467 545 A1**
(43) Date of publication of application: **13.10.2004**
(21) Application number: 04252025.4
(22) Date of filing: 05.04.2004
(51) Int. Cl.: H04M 3/42, H04M 7/00, H04M 3/54

(54) **Remote access to user-defined features via the Internet**

(30) Priority: 09.04.2003 GB 0308189
(71) Applicant: Mitel Knowledge Corporation, Ottawa, Ontario K2K 2W7 (CA)
(72) Inventor: Davies, Jim, Ontario K7S 3G7 (CA); Gray, Thomas A., Ontario K0A 1L0 (CA); Perry, Peter, Ottawa, Ontario K2K 1V2 (CA)
(74) Representative: Rickard, David John

(57) **Abstract**

A system is provided for a remote user having access to a remote voice communication system at a first location to implement user-defined features in an integrated communications platform at a second location. The system includes a personal assistant (PA) for implementing user-defined features on the integrated communications platform, and an Internet-enabled appliance having a remote policy application (RPA) for communicating user authentication and location information to the personal assistant (PA) over the Internet. In response, the personal assistant (PA) establishes a voice connection over the Public Switched Telephone Network (PSTN) between said the integrated communications platform and the remote voice communication system thereby enabling remote access to the user-defined features.

## Description

### Field of the Invention

This invention relates generally to communication systems, and more particularly to a system for remote access to Integrated Communications Platform (ICP) user-defined features.

### Background of the Invention

Enterprises invest significant amounts of money in internal communication networks to maximize employee interaction and to reduce communication costs. Enterprise-owned or leased networks provide cost efficient voice communication services to potential conversants anywhere in the world. A common difficulty for such systems is their inability to service employees who are working off site, whether at home or out of hotels. These employees are out of reach of the company communication system and so cannot gain access to its cost effective services.

In addition to providing cost effective communications, such systems also provide traditional telephony features. Users are given access to a plurality of features (Call Forward on Busy etc.) that are centrally located within a communication system, such as a PBX. The utility of these features is limited by their inability to be personalized to the needs of an individual and to be aware of the user's current activities. For example, a user may be occupied with some work. Such a user will therefore be 'busy' in relation to other work of less importance but 'available' in relation to work of higher priority or to information about his/her current task. Traditional telephony features such as Call Forward on Busy are coarse-grained and therefore cannot match these important human distinctions.

The very limited degree of personalization in feature sets according to the prior art results from the fact that traditional call processing has relied on a centralized definition of common features. Centralized feature definitions are part of a strategy to accelerate the time to market and to improve system stability. Expert designers typically develop standard features that are tested for compatibility before deployment. However, personalization with such a scheme is impossible because of the large numbers of possible personalized features.

The Internet telephony work on the SIP protocol (IETF) has created the CPL standard that partially addresses the goal of achieving personalized features (see Sinnreich, H; Johnston, A.B., *Internet Communication Using SIP,* Wiley, 2001 pp. 104-108, and The Internet Draft by Schulzrinne, H.; Rosenberg, J.; SIP Caller Preferences and Callee Capabilities, draft-ietf-sip-callerprefs-05.txt available at: http://www.softarmor.com/sipwg/drafts/draft-ietf-sip-callerprefs-05.txt). Although CPL allows the user a limited ability to locally specify call handling, it does not go beyond specifying policies on call handling based on the identity of the incoming caller and time of day. It does not take into account the user's context and is unable to accommodate conflict handling between user policies, thereby severely limiting the utility of CPL, it's scalability and evolvability.

According to co-pending U.K. patent application No. 0218712.8, an architecture and implementation are provided by which telephony features can be personalized to meet fine-grained needs. The parameters that affect personalization features are considered to be part of a user's work context and so these features are called 'context-aware'.

More particularly, the system is capable of:
1. Generating relevant information from incoming call messages and relating that to a user's current context
2. Identifying current user context and representing it in a way that can be utilized in call handling
3. Providing means to specify personalized features in a way that is natural to untrained users while still providing the regularity that allows for efficient execution
4. Providing means for identifying feature conflict and resolving such conflicts in an intuitive manner to accommodate the needs of untrained users.

The 'context-aware' system of 0218712.8 is implemented using:
1. A blackboard-based architecture for generation of user context information from incoming call information and relating that to the current user context
2. Standard means and parameters for specifying a user's context as it is pertinent to call handling
3. Means for detecting feature conflicts and resolving these conflicts in ways expected by naive users
4. Means for user specification of personalized features that is compatible with the ability and expectations of naive users while still providing the regularity required for efficient execution.

Unfortunately, remote employees are out of reach of these services. There has been much public discussion relating to the Internet being able to provide location transparent services of this type. However the requirements for network wide quality of service (QoS) and for high speed local access have delayed the time at which offering such Internet services can be made practical. For the home worker situation, many solutions based on ISDN services have been devised. With the multi-channel and data capabilities of ISDN, it is able to supply the required non-functional performance requirements of voice QoS and high-speed data connectivity services. However, ISDN has not achieved widespread use because of its high cost.

In summary, the inventors are unaware of any existing network that is capable of combining QoS and data connectivity at a low cost.

### Summary of the Invention

According to the present invention, the most desirable aspects of the Internet and PSTN are combined to create a composite solution that satisfies the non-functional requirements demanded by customers. The PSTN provides an excellent quality of service (QoS) for voice connections while the Internet supplies data connectivity, both of these services being provided at very low cost.

More particularly, a system is provided for a remote user having access to a remote voice communication system at a first location to implement user-defined features in an integrated communications platform at a second location. The system includes a personal assistant (PA) for implementing user-defined features on the integrated communications platform, and an Internet-enabled appliance having a remote policy application (RPA) for communicating user authentication and location information to the personal assistant (PA) over the Internet. In response, the personal assistant (PA) establishes a voice connection over the Public Switched Telephone Network (PSTN) between said the integrated communications platform and the remote voice communication system thereby enabling remote access to the user-defined features.

### Brief Description of the Drawings

A detailed description of the invention is set forth herein below, with reference to the following drawings, in which:
Figure 1 is a block diagram of an Internet telephony system according to the present invention;
Figure 2 is a diagram of a graphical user interface (GUI) for remote user log-in to the system of Figure 1; and
Figure 3 is a state diagram showing operation of a remote policy application (RPA) according to the present invention.

### Detailed Description of the Preferred Embodiment

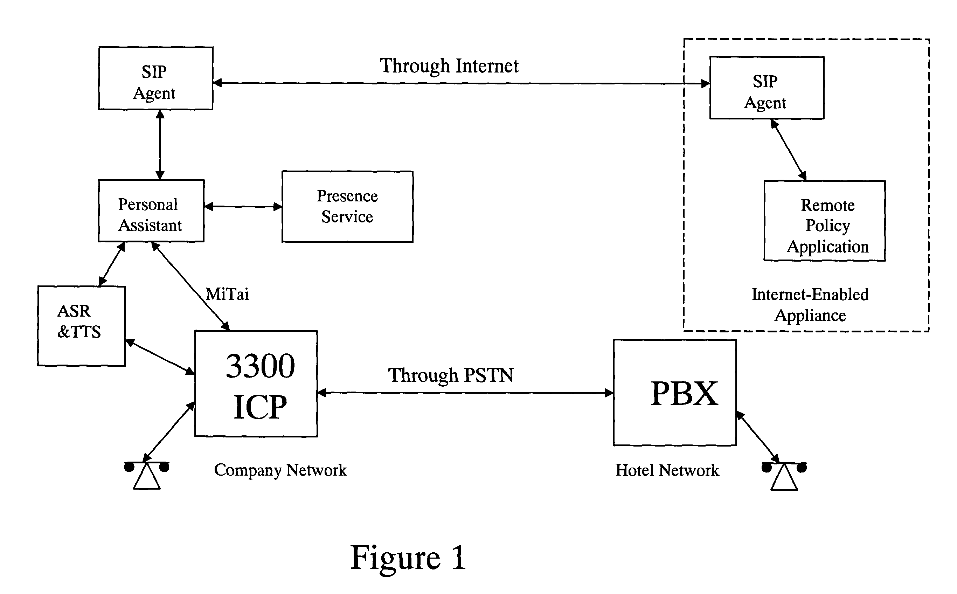

The following scenarios provide an overview of the operation of the system discussed in greater detail below with reference to Figures 1- 3:

### Hotel Scenario

In the hotel scenario, a traveler wishes to have his/her home ICP (PBX) services provided to him/her on a hotel telephone. For this scenario, it is assumed that the traveler has a laptop or other piece of computer equipment to allow connection to the company computer network.

The traveler initially connects to the home company network and undergoes an authentication process to confirm the user's identity with the home network. The user then initiates a remote policy application (RPA) that provides service to the user, as described in greater detail below.

In accordance with the RPA, the user provides contact information for the hotel room, such as the hotel's PSTN number and the internal routing number for the user's room. The RPA automatically sets the ICP (PBX) feature to forward all appropriate incoming calls to this location. This can be done conventionally with forwarding numbers and tone plans where an auto-attendant is used at the hotel to implement the service, as is usually the case, or via DID lines. Alternatively, if the hotel uses an automated attendant to answer calls, then a voice announcement may be played automatically by a TTS system requesting transfer to the room number supplied by the traveler or to the traveler by name.

Incoming calls are directed to the traveler so as to ring the telephone in the room. Alternatively, an Internet connection can be used to provide call information - screen pops etc. for initiating this service (e.g. by using a push service to an application on the user's laptop).

Furthermore, other indications such as messages emails etc., can also be sent to the user so that the RPA application provides functions as a real time notification client

### Home Worker Scenario

The home worker scenario is very similar to the hotel case. However in this case, the worker at home does not have to use an expensive ISDN connection to gain multimedia access to his company's network.

### PSTN Programmable 800 Roaming Scenario

Many people use personal 800 number service wherein the user supplies a 'Call Me' 800 number to customers and other potential conversants in order to encourage communication. According to the present invention, the 800 number service may be extended to multiple programmable end points as needed by a roaming subscriber. In this case the traveler dials a special PSTN number for interaction with a service creation environment that creates intelligent network applications to program the operation of the PSTN service. The mechanism to do this is directly analogous to the description provided below for the 3300 ICP (PBX) case, and is implemented with a voice-based browser of conventional design.

### Data Enabled Centrex Service

This case uses the capabilities of the invention, but supplies services to paying subscribers instead of employees. The services are equivalent to a data-capable highly-featured Centrex of the type contemplated for Internet services.

### System Operation

Turning now to Figure 1, a user is provided with a remote policy application (RPA) installed in an Internet-enabled appliance. The appliance inter-operates with other major components in the system, which is situated at the user's home ICP (PBX). This interoperation is conducted through message exchanges with the user's personal assistant (PA), which operates similarly to the contextual call handling application described in UK Patent Application No. 0218712.8, and related applications. The personal assistant (PA) interconnects with the local ICP (e.g. Mitel MN3300 ICP) through either a first or third party telephony control protocol (e.g. the Mitel MiTAI protocol). Communication between the RPA and PA is enabled by XML messages carried in the payload of SIP messages. Each RPA is provided with its own SIP agent. A single SIP agent with a well-known address is provided at the company ICP (PBX) for communication with all PAs using a proprietary protocol. For example, as described in UK Patent Application No. 0218712.8 referred to above, communication can be via assertions placed in a common tuple space. Other methods of communication may be used.

The system of Figure 1 may be used both to make and to receive calls. In the case of receiving calls, the PA implements user-defined polices on the types of calls that should be forwarded to the user's RPA. For calls that meet the criteria for forwarding, the PA first sends an XML-based message through the SIP channel to the RPA containing calling party identification information. It then initiates a call to the hotel telephone associated with the RPA using the contact information provided, as discussed above.

For outgoing calls, the user calls up a GUI on his RPA into which he/she places the directory number (DN) or other information capable of directing the call at the company ICP (PBX). Upon the user's indication, the RPA sends this message though the IP channel to the PA. The PA initiates a call to the RPA. The hotel phone rings, and when the call is answered by the user, it is be transferred (blind transfer) under third party control by the PA to the directory number (DN) requested by the user.

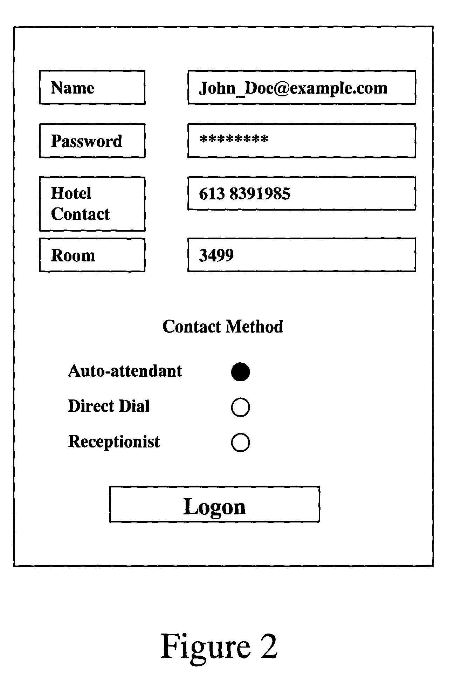

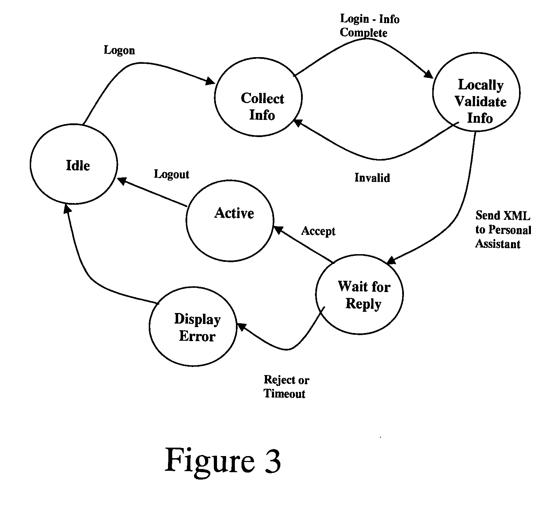

The foregoing description provides an indication of the general operation of the system according to the present invention. Additional details are provided below with reference to Figures 2 and 3.

### Types of Remote Access Service

As discussed above, telephone access to users at the remote site may be provided in one of three ways: a) by a direct dial number, b) through a conventional auto-attendant, and c) through a human receptionist. The user must indicate the type of service required when logging-in and authenticating with the home ICP (PBX).

### Direct Dial

This is the simplest case, wherein the telephone at the remote site is addressable through a public directory number. In this case, the system simply dials that number though the PSTN.

### Auto-attendant

In principle, the ICP (PBX) system dials a contact number for the auto-attendant at the remote site, and waits for an answer. After a brief waiting period to ensure that the auto-attendant is ready to accept its digits, the home system then out-pulses the directory number (DN) of the telephone and connects an automatic speech recognizer (ASR) in the home ICP (PBX). The ARS then listens to detect a code word (i.e. hot word spotting) spoken by the user when he/she answers the call. Upon detecting the code word, the ICP (PBX) home system is triggered to provide service to the remote user.

### Human Receptionist

This case is very similar to the auto-attendant, except that it requires the use of a text to speech converter in addition to an automatic speech recognizer. A call progress tone detector is used to detect the end of an audible ringing signal (not the onset of the ringing signal). The system first dials the hotel contact number provided by the user in his/her log in information and then waits to receive an answer from the remote network. Upon receipt of an answer, the text to speech converter in the home system begins to repetitively play a voice announcement indicating a desire to be connected to the distant telephone using the contact information supplied by the user. This repetition accommodates the situation wherein the system must wait in a queue for answer by the receptionist (i.e. on hold). The receptionist puts the call through to the telephone, which in response generates audible ringing. The automatic speech recognizer is enabled to detect the special code word (i.e. hot word spotting) spoken by the user to indicate that the call has been routed successfully to the distant telephone. The home ICP (PBX) then supplies the required service.

### Logging Into System

As discussed above, prior to receiving service the user must first log into his/her PA from his/her RPA in order to inform the PA of the required contact information and service required, and to notify the PA that this contact information is valid and calls should be forwarded. Calls are forwarded to the RPA only as long as the user is logged in.

The log in protocol consists of a very simple state machine in the RPA, as shown in Figure 3. Upon request from a user to log on, the GUI of Figure 2 is presented to the user at his/her Internet enabled appliance (e.g. laptop computer, PDA, cellular telephone, etc.). The data entered into the GUI is locally checked for validity and transmitted to the personal assistant (PA) in the registration document format shown below as a SIP message. The appliance then enters a state in which it waits for a reply (in the registration reply document format set forth below). If it does not receive a valid log in reply document in a time out period, the application reverts to the idle state. If it receives a log in reply document indicating an error in the log in document it displays the error information in a suitable format to the user and goes back to an idle state. If it receives an indication of a valid log in it goes to the active state where the user is able to make outgoing calls and receive incoming calls. This process is illustrated in the state machine of Figure 3.

### Log In Document

A DTD for the document transmitted for the login process is shown below, followed by an example of a document immediately thereafter.

### DTD of Log In Document

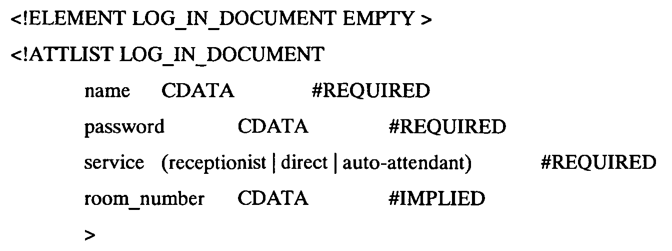

### Example of Log In Document

<LOG_IN_DOCUMENT/
name = 'john doe@example.com'
password = 'xlb822'
service = 'auto-attendant'>
room_number = '3499'
>

### Log In Reply Document

The log in reply document is sent as part of the log in protocol to indicate whether the login request has been accepted.

### DTD of Log In Reply Document

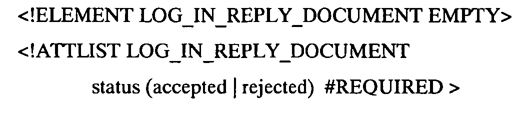

### Logging Out of a Connection

The user sends logout information to indicate that he/she is no longer willing to take calls at the remote site. The PA, upon receiving this information, disables subsequent forwarding of incoming calls to the site

### DTD of Log Out Document

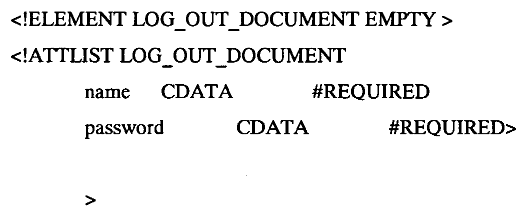

### Example of Log In Document

<LOG OUT DOCUMENT/
name = 'john doe@example.com'
password = 'xlb822'

### Log Out Reply Document

The log in reply document is sent as part of the log out protocol.

### DTD of Log Out Reply Document

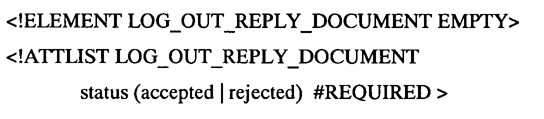

### Receiving an Incoming Call

When a user's PA is notified of an incoming call, it assesses the call request with user supplied policies, as set forth in UK Patent Application No. 0218712.8 to see whether the call is appropriate to forward to the RPA. The PA ascertains information about the identity of the incoming caller from the call request and uses that when applying the relevant policies to determine the appropriateness of forwarding the call to the RPA. If the call is appropriate to forward, the PA forwards a data message to the RPA using the aforementioned SIP channel. This is done using a SIP message to carry an XML-based message in the format shown below. The RPA displays this in an appropriate manner to alert the user. The PA also directs the ICP (PBX) to forward the voice portion of the call through the PSTN using the techniques described for the various services (direct, auto-attendant, human receptionist) above.

When an incoming call is forwarded via the auto-attendant or receptionist services, audible ringing is supplied at the ICP (PBX). Cut though of the audio path to the PSTN trunk is performed when the answer event is received from the trunk.

### DTD for Incoming Call Document

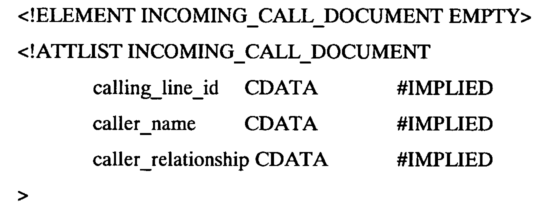

### Example of Incoming Call Document

<INCOMING_CALL_DOCUMENT/
calling_line_id = '6135552368'
caller_name = 'John Doe'
caller_relationship = 'VIP Customer'
>

### Making an Outgoing Call

When a user wishes to make an outgoing call, he/she interacts with the RPA to capture the calling information. This is sent to the PA using the SIP channel in an XML-based message (i.e. in this embodiment, a SIP message). The PA connects to the distant user telephone using the techniques described above. When this is accomplished, the PA directs the ICP (PBX) to make the desired call.

### DTD for Outgoing Call Document

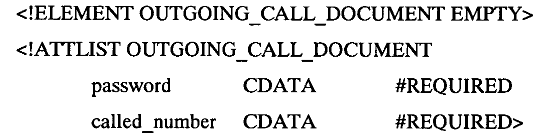

### Example of Outgoing Call Document

<OUTGOING_CALL_DOCUMENT/ password = 'xlb822', called_number= '3499'>

### DTD for Outgoing Call Reply Document

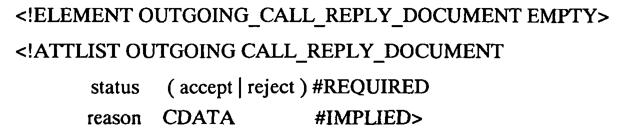

### Examples of Outgoing Call Reply Document

### Call Accepted

<OUTGOING_CALL_REPLY_DOCUMENT\ status = 'accept'>

### Call Rejected

<OUTGOING_CALL_REPLY_DOCUMENT\ status = 'reject', reason = 'invalid number'>

The present invention has been described though the use of an example XML-based protocol sent over a SIP channel. The example is fully functional and performs the service described. However, in a commercial setting additional considerations are likely desirable having regard to security and privacy (e.g. password snooping, replay attacks, etc.) The techniques used to address these concerns are well known (e.g. authentication schemes such as message digest etc.) Discussions of such technologies, although necessary in practice, would only distract from the main emphasis of this disclosure, which relates to the provision of policy-based service at a remote site with QoS with data non-functional requirements being satisfied.

Alternatives and variations of the invention are possible. A potential exists that this service could be offered commercially to paying subscribers. A person could subscribe to this service and receive the call filtering and cost effective communication service provided by an enterprise. In effect, this creates a highly featured Centrex service combined with data services without the need to wait for adequate Internet technology to do this to be developed. Users in the SOHO (small home office systems) market, it is anticipated, would find this service very attractive because of the high cost sensitivity in this market (i.e. systems capable of practical service in very small line size).

All such alternatives and variations are believed to be within the sphere and scope of the invention as defined by the claims appended hereto.

## Claims

1. A system for a remote user having access to a remote voice communication system at a first location to implement user-defined features in an integrated communications platform at a second location, comprising:
a personal assistant (PA) for implementing said user-defined features on said integrated communications platform; and
an Internet-enabled appliance having a remote policy application (RPA) for communicating user authentication and location information to said personal assistant (PA) over the Internet, in response to which said personal assistant (PA) establishes a voice connection over the Public Switched Telephone Network (PSTN) between said integrated communications platform and said remote voice communication system thereby enabling remote access to said user-defined features.

2. A system as claimed in claim 1, further comprising a first SIP Agent connected to said remote policy application (RPA) and a second SIP Agent connected to said personal assistant (PA) for effecting communication using SIP messages between said remote policy application (RPA) and said personal assistant (PA) over the Internet.

3. A method for a remote user having Internet access via a remote policy application (RPA) and voice access via a remote voice communication system to implement user-defined features via a Personal Assistant (PA) in a local integrated communications platform, comprising:
communicating user authentication and location information from said remote policy application (RPA) to said personal assistant (PA) over the Internet;
establishing a voice connection over the Public Switched Telephone Network (PSTN) between said local integrated communications platform and said remote voice communication system and enabling said user-defined features based on said user authentication and location information.

4. A method as claimed in claim 3, further including generating a graphical user interface for said remote user to enter said user authentication and location information.

5. A method as claimed in claim 3 or claim 4, wherein said establishing of said voice connection over the Public Switched Telephone Network further comprises said personal assistant (PA) sending a call request over the Internet to said remote policy application (RPA), wherein said call request contains calling party identification information, and initiating a voice call from said local integrated communications platform to the remote voice communication system using said location information.

6. A method as claimed in claim 5, wherein said initiating of said voice call from said local integrated communications platform to the remote voice communication system further comprises dialing a public directory number identified in said location information for said remote voice communication system.

7. A method as claimed in claim 5, wherein said initiating of said voice call from said local integrated communications platform to the remote voice communication system further comprises:
dialing a contact number identified in said location information for an auto-attendant at the remote voice communication system;
upon call answer by said auto-attendant out-pulsing a directory number (DN) identified in said location information of a telephone for said remote user;
connecting an automatic speech recognizer (ASR) in said local integrated communications platform for listening to detect a code word spoken by the remote user upon answering; and
upon detecting said code word providing a voice channel over said PSTN to provide service to the remote user.

8. A method as claimed in claim 5, wherein said initiating of said voice call from said local integrated communications platform to the remote voice communication system using said location information further comprises:
dialing a contact number identified in said location information for an attendant at the remote voice communication system;
detecting at said local integrated communications platform the end of an audible ringing signal indicative of call answer by said attendant;
repetitively playing a voice announcement indicating a desire to be connected to a telephone identified in said location information for said remote user;
detecting at said local integrated communications platform a further audible ringing signal indicative of the call being placed to said telephone by said attendant;
connecting an automatic speech recognizer (ASR) in said local integrated communications platform for listening to detect a code word spoken by the remote user upon answering; and
upon detecting said code word providing a voice channel over said PSTN to provide service to the remote user.

9. A method as claimed in claim 3 or claim 4, wherein said establishing of said voice connection over the Public Switched Telephone Network further comprises said remote policy application (RPA) sending a call request over the Internet to said personal assistant (PA), initiating a voice call from said local integrated communications platform to the remote voice communication system using said location information, and upon call answer by said remote user transferring the call within said local integrated communications platform to a directory number (DN) identified in said location information.

10. A method as claimed in any one of claims 3 to 9, further comprising validating said user authentication information before establishing said voice connection.
